# EUROPEAN PATENT APPLICATION

(11) **EP 1 787 513 A2**
(43) Date of publication of application: **23.05.2007**
(21) Application number: 06255810.1
(22) Date of filing: 13.11.2006
(51) Int. Cl.: A01N 27/00, A01N 3/00, A01N 61/00, A01N 25/30, A01N 25/02, A01P 21/00

(54) **Compositions with cyclopropenes**

(30) Priority: 18.11.2005 US 738176 P
(71) Applicant: Rohm and Haas Company, Philadelphia, PA 19106-2399 (US)
(72) Inventor: Jacobson, Richard Martin, Chalfont Pennsylvania 18914 (US); Kostansek, Edward Charles, Buckingham, Pennsylvania 18912 (US)
(74) Representative: Kent, Venetia Katherine

(57) **Abstract**

A composition is provided that contains one or more cyclopropene and that contains one or more of
(AA) one or more plant growth regulator that is not a cyclopropene, or
(BB) one or more adjuvant selected from the group consisting of one or more surfactants, one or more alcohols, one or more oils, and mixtures thereof, or
(CC) one or more mixture of said (AA) and said (BB).

Also provided is a method that includes the step of contacting such compositions to one or more plants or plant parts.

## Description

### BACKGROUND:

It is often desirable to contact a plant or plant part with a cyclopropene. US Patent Application 11/131,614 discloses applying a composition containing one or more of certain specific cyclopropene compounds, an encapsulating agent, and an adjuvant to a plant or plant part. Methods that are limited to a relatively small set of cyclopropene compounds may fail to make use of a cyclopropene compound that is outside that set but that is optimum for a particular use, based on, for example, the optimum cyclopropene compound's cost or its compatability with other formulating ingredients or its effect on a particular plant or any combination thereof. It is desired to provide compositions that are useful for treating plants or plant parts and that contain one or more of a wider variety of cyclopropene compounds.

### STATEMENT OF THE INVENTION:

In the present invention, there is provided a composition comprising
(I) one or more cyclopropenes of the formula 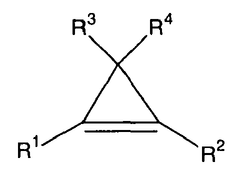 wherein:
   a) each R¹, R², R³ and R⁴ is independently selected from the group consisting of H and a chemical group of the formula:

      -(L)ₙ-Z

      wherein:
      i) n is an integer from 0 to 12;
      ii) each L is independently selected from the group consisting of D1, D2, E, and J, wherein:
         D1 is of the formula: 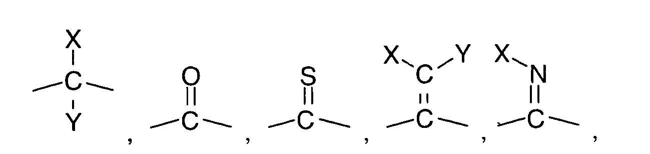 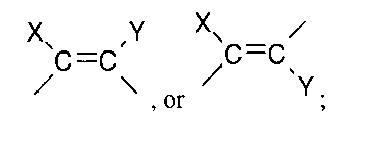
         D2 is of the formula: 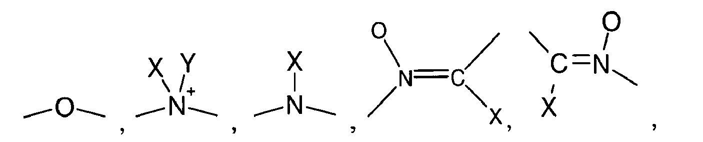 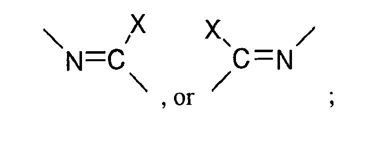
         E is of the formula: 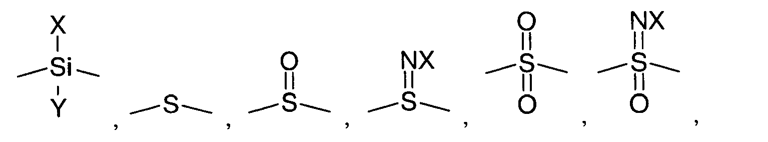 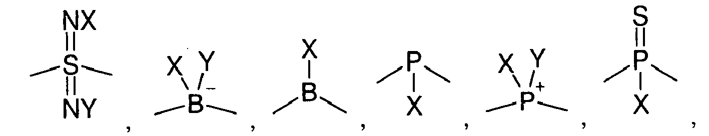 or 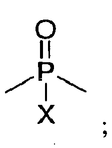 and
         J is of the formula: 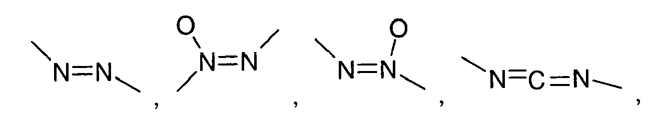 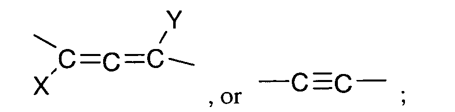 wherein :
            A) each X and Y is independently a chemical group of the formula:

               -(L)ₘ-Z;

               and
            B) m is an integer from 0 to 8; and
            C) no more than two D2 or E groups are adjacent to each other and no J groups are adjacent to each other;
      iii) each Z is independently selected from the group consisting of hydrogen, halo, cyano, nitro, nitroso, azido, chlorate, bromate, iodate, isocyanato, isocyanido, isothiocyanato, pentafluorothio, and a chemical group G, wherein G is a 3 to 14 membered ring system; and
      iv) the total number of heteroatoms in -(L)ₙ-Z is from 0 to 6; and
   b) the total number of non-hydrogen atoms in said compound is 50 or less; and
(II) one or more of
   (AA) one or more plant growth regulator that is not a cyclopropene, or
   (BB) one or more adjuvant selected from the group consisting of one or more surfactants, one or more alcohols, one or more oils, and mixtures thereof, or
   (CC) one or more mixture of said (AA) and said (BB).

### DETAILED DESCRIPTION:

As used herein, all percentages are percent by weight and all parts are parts by weight, unless otherwise specified, and are inclusive and combinable. All ratios are by weight and all ratio ranges are inclusive and combinable. All molar ranges are inclusive and combinable.

As used herein, the term "alkyl" means straight chain, branched chain , or cyclic (C₁-C₂₀) radicals which include, for example, methyl, ethyl, n-propyl, isopropyl, 1-ethylpropyl, n-butyl, tert-butyl, isobutyl, 2,2-dimethylpropyl, pentyl, octyl, and decyl. The terms "alkenyl" and "alkynyl" mean (C₃-C₂₀) alkenyl and (C₃-C₂₀) alkynyl groups such as, for example, 2-propenyl, 2-butenyl, 3-butenyl, 2-methyl-2-propenyl, and 2-propynyl. The term "cycloalkylalkyl" means a (C₁-C₁₅) alkyl group substituted with a (C₃-C₇) cycloalkyl group such as, for example cyclopropylmethyl, cyclopropylethyl, cyclobutylmethyl, and cyclopentylethyl. The term "haloalkyl" means an alkyl radical wherein one or more of the hydrogen atoms have been replaced by a halogen atom. The term "halogen" means one or more of fluorine, chlorine, bromine, and iodine.

The practice of the present invention involves the use of one or more cyclopropenes. As used herein, "cyclopropene" means any compound with the formula 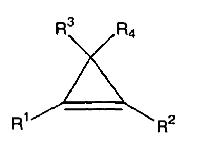 Cyclopropenes suitable for use in the present invention are those that have the characteristics a) and b) set forth herein above.

For the purposes of this invention, in the structural representations of the various L groups, each open bond indicates a bond to another L group, a Z group, or the cyclopropene moiety. For example, the structural representation 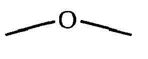 indicates an oxygen atom with bonds to two other atoms; it does not represent a dimethyl ether moiety.

Among embodiments in which at least one of R¹, R², R³, and R⁴ is not hydrogen and has more than one L group, the L groups within that particular R¹, R², R³, or R⁴ group may be the same as the other L groups within that same R¹, R², R³, or R⁴ group, or any number of L groups within that particular R¹, R², R³, or R⁴ group may be different from the other L groups within that same R¹, R², R³, or R⁴ group.

Among embodiments in which at least one of R¹, R², R³, and R⁴ contains more than one Z group, the Z groups within that R¹, R², R³, or R⁴ group may be the same as the other Z groups within that R¹, R², R³, or R⁴ group, or any number of Z groups within that R¹, R², R³, or R⁴ group may be different from the other Z groups within that R¹, R², R³, or R⁴ group.

The R¹, R², R³, and R⁴ groups are independently selected from the suitable groups. The R¹, R², R³, and R⁴ groups may be the same as each other, or any number of them may be different from the others. Among the groups that are suitable for use as one or more of R¹, R², R³, and R⁴ are, for example, aliphatic groups, aliphatic-oxy groups, alkylphosphonato groups, cycloaliphatic groups, cycloalkylsulfonyl groups, cycloalkylamino groups, heterocyclic groups, aryl groups, heteroaryl groups, halogens, silyl groups, other groups, and mixtures and combinations thereof. Groups that are suitable for use as one or more of R¹, R², R³, and R⁴ may be substituted or unsubstituted. Independently, groups that are suitable for use as one or more of R¹, R², R³, and R⁴ may be connected directly to the cyclopropene ring or may be connected to the cyclopropene ring through an intervening group such as, for example, a heteroatom-containing group.

Among the suitable R¹, R², R³, and R⁴ groups are, for example, aliphatic groups. Some suitable aliphatic groups include, for example, alkyl, alkenyl, and alkynyl groups. Suitable aliphatic groups may be substituted or unsubstituted. Some suitable substituted aliphatic groups include, for example, acetylaminoalkenyl, acetylaminoalkyl, acetylaminoalkynyl, alkoxyalkoxyalkyl, alkoxyalkenyl, alkoxyalkyl, alkoxyalkynyl, alkoxycarbonylalkenyl, alkoxycarbonylalkyl, alkoxycarbonylalkynyl, alkylcarbonyloxyalkyl, alkyl(alkoxyimino)alkyl, carboxyalkenyl, carboxyalkyl, carboxyalkynyl, haloalkoxyalkenyl, haloalkoxyalkyl, haloalkoxyalkynyl, haloalkenyl, haloalkyl, haloalkynyl, hydroxyalkenyl, hydroxyalkyl, hydroxyalkynyl, trialkylsilylalkenyl, trialkylsilylalkyl, trialkylsilylalkynyl, , dialkylaminoalkyl, alkylsulfonylalkyl, alkylthioalkenyl, alkylthioalkyl, alkylthioalkynyl, , haloalkylthioalkenyl, haloalkylthioalkyl, and haloalkylthioalkynyl.

Also among the suitable R¹, R², R³, and R⁴ groups are, for example, substituted and unsubstituted aliphatic-oxy groups, such as, for example, alkenoxy, alkoxy, alkynoxy, and alkoxycarbonyloxy.

Also among the suitable R¹, R², R³, and R⁴ groups are, for example, substituted and unsubstituted alkylphosphonato, substituted and unsubstituted alkylphosphato, substituted and unsubstituted alkylamino, substituted and unsubstituted alkylsulfonyl, substituted and unsubstituted alkylcarbonyl, and substituted and unsubstituted alkylaminosulfonyl, including, for example, alkylphosphonato, dialkylphosphato, dialkylthiophosphato, dialkylamino, alkylcarbonyl, and dialkylaminosulfonyl.

Among the aliphatic groups suitable as R¹, R², R³, or R⁴ are, for example, cycloaliphatic groups, including, for example, cycloalkenyl, cycloalkyl, and cycloalkynyl. Suitable cycloaliphatic groups may be substituted or unsubstituted. Among the suitable substituted cycloaliphatic groups are, for example, acetylaminocycloalkenyl, acetylaminocycloalkyl, acetylaminocycloalkynyl, cycloalkenoxy, cycloalkoxy, cycloalkynoxy, alkoxyalkoxycycloalkyl, alkoxycycloalkenyl, alkoxycycloalkyl, alkoxycycloalkynyl, alkoxycarbonylcycloalkenyl, alkoxycarbonylcycloalkyl, alkoxycarbonylcycloalkynyl, cycloalkylcarbonyl, alkylcarbonyloxycycloalkyl, carboxycycloalkenyl, carboxycycloalkyl, carboxycycloalkynyl, halocycloalkoxycycloalkenyl, halocycloalkoxycycloalkyl, halocycloalkoxycycloalkynyl, halocycloalkenyl, halocycloalkyl, halocycloalkynyl, hydroxycycloalkenyl, hydroxycycloalkyl, hydroxycycloalkynyl, trialkylsilylcycloalkenyl, trialkylsilylcycloalkyl, trialkylsilylcycloalkynyl, dialkylaminocycloalkyl, alkylsulfonylcycloalkyl, cycloalkylcarbonyloxyalkyl, cycloalkylsulfonylalkyl, alkylthiocycloalkenyl, alkylthiocycloalkyl, alkylthiocycloalkynyl, haloalkylthiocycloalkenyl, haloalkylthiocycloalkyl, and haloalkylthiocycloalkynyl.

Also among the suitable R¹, R², R³, and R⁴ groups are, for example, substituted and unsubstituted cycloalkylsulfonyl groups and cycloalkylamino groups, such as, for example, dicycloalkylaminosulfonyl and dicycloalkylamino.

Also among the suitable R¹, R², R³, and R⁴ groups are, for example, substituted and unsubstituted heterocyclyl groups (i.e., non-aromatic cyclic groups with at least one heteroatom in the ring). Among the suitable substituted heterocyclyl groups are, for example, alkenylheterocyclyl, alkylheterocyclyl, alkynylheterocyclyl, acetylaminoheterocyclyl, alkoxyalkoxyheterocyclyl, alkoxyheterocyclyl, alkoxycarbonylheterocyclyl, alkylcarbonyloxyheterocyclyl, carboxyheterocyclyl, haloalkoxyheterocyclyl, haloheterocyclyl, hydroxyheterocyclyl, trialkylsilylheterocyclyl, dialkylaminoheterocyclyl, alkylsulfonylheterocyclyl, alkylthioheterocyclyl, heterocyclylthioalkyl, and haloalkyllthioheterocyclyl.

Also among the suitable R¹, R², R³, and R⁴ groups are, for example, substituted and unsubstituted heterocyclyl groups that are connected to the double bond adducted cyclopropene compound through an intervening oxy group, amino group, carbonyl group, or sulfonyl group; examples of such R¹, R², R³, and R⁴ groups are heterocyclyloxy, heterocyclylcarbonyl, diheterocyclylamino, and diheterocyclylaminosulfonyl.

Also among the suitable R¹, R², R³, and R⁴ groups are, for example, substituted and unsubstituted aryl groups. Some suitable substituted aryl groups are, for example, alkenylaryl, alkylaryl, alkynylaryl, acetylaminoaryl, aryloxy, alkoxyalkoxyaryl, alkoxyaryl, alkoxycarbonylaryl, arylcarbonyl, alkylcarbonyloxyaryl, carboxyaryl, diarylamino, haloalkoxyaryl, haloaryl, hydroxyaryl, trialkylsilylaryl, dialkylaminoaryl, alkylsulfonylaryl, arylsulfonylalkyl, alkylthioaryl, arylthioalkyl, diarylaminosulfonyl, and haloalkylthioaryl.

Also among the suitable R¹, R², R³, and R⁴ groups are, for example, substituted and unsubstituted heteroaryl groups. Some suitable substituted heteroaryl groups are, for example, alkenylheteroaryl, alkylheteroaryl, alkynylheteroaryl, acetylaminoheteroaryl, heteroaryloxy, alkoxyalkoxyheteroaryl, alkoxyheteroaryl, alkoxycarbonylheteroaryl, heteroarylcarbonyl, alkylcarbonyloxyheteroaryl, carboxyheteroaryl, diheteroarylamino, haloalkoxyheteroaryl, haloheteroaryl, hydroxyheteroaryl, trialkylsilylheteroaryl, dialkylaminoheteroaryl, alkylsulfonylheteroaryl, heteroarylsulfonylalkyl, alkylthioheteroaryl, and haloalkylthioheteroaryl.

Also among the suitable R¹, R², R³, and R⁴ groups are, for example, substituted and unsubstituted heteroaryl groups that are connected to the double bond adducted cyclopropene compound through an intervening oxy group, amino group, carbonyl group, sulfonyl group, thioalkyl group, or aminosulfonyl group; examples of such R¹, R², R³, and R⁴ groups are diheteroarylamino, heteroarylthioalkyl, and diheteroarylaminosulfonyl.

Also among the suitable R¹, R², R³, and R⁴ groups are, for example, hydrogen, fluoro, chloro, bromo, iodo, cyano, nitro, nitroso, azido, chlorato, bromato, iodato, isocyanato, isocyanido, isothiocyanato, pentafluorothio; acetoxy, carboethoxy, cyanato, nitrato, nitrito, perchlorato, allenyl; butylmercapto, diethylphosphonato, dimethylphenylsilyl, isoquinolyl, mercapto, naphthyl, phenoxy, phenyl, piperidino, pyridyl, quinolyl, triethylsilyl, trimethylsilyl; and substituted analogs thereof.

As used herein, the chemical group G is a 3 to 14 membered ring system. Ring systems suitable as chemical group G may be substituted or unsubstituted; they may be aromatic (including, for example, phenyl and napthyl) or aliphatic (including unsaturated aliphatic, partially saturated aliphatic, or saturated aliphatic); and they may be carbocyclic or heterocyclic. Among heterocyclic G groups, some suitable heteroatoms are, for example, nitrogen, sulfur, oxygen, and combinations thereof. Ring sysytems suitable as chemical group G may be monocyclic, bicyclic, tricyclic, polycyclic, or fused; among suitable chemical group G ring systems that are bicyclic, tricyclic, or fused, the various rings in a single chemical group G may be all the same type or may be of two or more types (for example, an aromatic ring may be fused with an aliphatic ring).

In some embodiments, G is a ring system that contains a saturated or unsaturated 3 membered ring, such as, for example, a substituted or unsubstituted cyclopropane, cyclopropene, epoxide, or aziridine ring.

In some embodiments, G is a ring system that contains a 4 membered heterocyclic ring; in some of such embodiments, the heterocyclic ring contains exactly one heteroatom. Independently, in some embodiments, G is a ring system that contains a heterocyclic ring with 5 or more members; in some of such embodiments, the heterocyclic ring contains 1 to 4 heteroatoms. Independently, in some embodiments, the ring in G is unsubstituted; in other embodiments, the ring system contains 1 to 5 substituents; in some of the embodiments in which G contains substituents, each substituent is independently chosen from chemical groups in the category X as defined herein below. Also suitable are embodiments in which G is a carbocyclic ring system.

Among the suitable G groups are, for example, cyclopropyl, cyclobutyl, cyclopent-3-en-1-yl, 3-methoxycyclohexan-1-yl, phenyl, 4-chlorophenyl, 4-fluorophenyl, 4-bromophenyl, 3-nitrophenyl, 2-methoxyphenyl, 2-methylphenyl, 3-methyphenyl, 4-methylphenyl, 4-ethylphenyl, 2-methyl-3-methoxyphenyl, 2,4-dibromophenyl, 3,5-difluorophenyl, 3,5-dimethylphenyl, 2,4,6-trichlorophenyl, 4-methoxyphenyl, naphthyl, 2-chloronaphthyl, 2,4-dimethoxyphenyl, 4-(trifluoromethyl)phenyl, 2-iodo-4-methylphenyl, pyridin-2-yl, pyridin-3-yl, pyridin-4-yl, pyrazinyl, pyrimidin-2-yl, pyrimidin-4-yl, pyrimidin-5-yl, pyridazinyl, triazol-1-yl, imidazol-1-yl, thiophen-2-yl, thiophen-3-yl, furan-2-yl, furan-3-yl, pyrrolyl, oxazolyl, isoxazolyl, thiazolyl, isothiazolyl, oxadiazolyl, thiadiazolyl, quinolyl, isoquinolyl, tetrahydrofuryl, pyrrolidinyl, piperidinyl, tetrahydropyranyl, morpholinyl, piperazinyl, dioxolanyl, dioxanyl, indolinyl and 5-methyl-6-chromanyl, adamantyl, norbornyl, and their substituted analogs such as, for example: 3-butyl-pyridin-2-yl, 4-bromo-pyridin-2-yl, 5-carboethoxy-pyridin-2-yl, and 6-methoxyethoxy-pyridin-2-yl.

In some embodiments, each G is independently a substituted or unsubstituted phenyl, pyridyl, cyclohexyl, cyclopentyl, cycloheptyl, pyrolyl, furyl, thiophenyl, triazolyl, pyrazolyl, 1,3-dioxolanyl, or morpholinyl. Among these embodiments include those embodiments, for example, in which G is unsubstituted or substituted phenyl, cyclopentyl, cycloheptyl, or cyclohexyl. In some of these embodiments, G is cyclopentyl, cycloheptyl, cyclohexyl, phenyl, or substituted phenyl. Among embodiments in which G is substituted phenyl are embodiments, for example, in which there are 1, 2, or 3 substituents. Independently, also among embodiments in which G is substituted phenyl are embodiments, for example, in which the substituents are independently selected from methyl, methoxy, and halo.

In some embodiments, one or more cylcopropenes are used in which one or more of R¹, R², R³, and R⁴ are hydrogen. In some embodiments, R¹ or R² or both R¹ and R² are hydrogen. Independently, in some embodiments, R³ or R⁴ or both R³ and R⁴ are hydrogen. In some embodiments, R², R³, and R⁴ are hydrogen.

In some embodiments, the composition of the present invention does not contain any cyclopropene of the formula 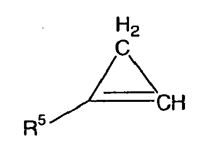 where R⁵ is hydrogen or a substituted or unsubstituted alkyl, alkenyl, alkynyl, cycloalkyl, cycloalkylalkyl, phenyl, or naphthyl group; wherein the substituents, when present, are independently halogen, alkoxy, or substituted or unsubstituted phenoxy.

In some embodiments, at least one of R¹, R², R³, or R⁴ is a group that has no double bond. Independently, in some embodiments, at least one of R¹, R², R³, or R⁴ is a group that has no triple bond. Independently, in some embodiments, at least one of R^{*}, R², R³, and R⁴ is a group that has no halogen atom substituent. Independently, in some embodiments, at least one of R¹, R², R³, or R⁴ is a group that has no substituents that are ionic. Independently, in some embodiments, at least one of R¹, R², R³, or R⁴ is a group that is not capable of generating oxygen compounds.

The cyclopropenes applicable to this invention may be prepared by any method. Some examples of suitable methods of preparation of cyclopropenes are the processes disclosed in U. S. Patents No. 5,518,988 and 6,017,849.

The amount of cyclopropene in compositions of the present invention may vary widely, depending on the type of composition and the intended method of use. In some embodiments, the amount of cyclopropene, based on the total weight of the composition, is 99% by weight or less; or 4% by weight or less; or 1% by weight or less; or 0.5% by weight or less; or 0.05% by weight or less. Independently, in some embodiments, the amount of cyclopropene, based on the total weight of the composition, is 0.000001% by weight or more; or 0.00001% by weight or more; or 0.0001% by weight or more; or 0.001% by weight or more.

In compositions of the present invention that include water, the amount of cyclopropene may be characterized as parts per million (i.e., parts by weight of cyclopropene per 1,000,000 parts by weight of water, "ppm") or as parts per billion (i.e., parts by weight of cyclopropene per 1,000,000,000 parts by weight of water, "ppb"). In some embodiments, the amount of cyclopropene is 1 ppb or more; or 10 ppb or more; or 100 ppb or more. Independently, in some embodiments, the amount of cyclopropene is 10,000 ppm or less; or 1,000 ppm or less.

In some embodiments, the practice of the present invention involves the use of one or more metal-complexing agents. A metal-complexing agent is a compound that contains one or more atoms capable of forming coordinate bonds with metal atoms. Some metal-complexing agents are chelating agents. As used herein, a "chelating agent" is a compound that contains two or more atoms that are capable of forming coordinate bonds with a metal atom, and a single molecule of the chelating agent is capable of forming two or more coordinate bonds with a single metal atom. Suitable chelating agents include, for example, organic and inorganic chelating agents. Among the suitable inorganic chelating agents are, for example, phosphates such as, for example, tetrasodium pyrophosphate, sodium tripolyphosphate, and hexametaphosphoric acid. Among the suitable organic chelating agents are those with macrocyclic structures and non-macrocyclic structures. Among the suitable macrocyclic organic chelating agents are, for example, porphine compounds, cyclic polyethers (also called crown ethers), and macrocyclic compounds with both nitrogen and oxygen atoms.

Some suitable organic chelating agents that have non-macrocyclic structures are, for example, aminocarboxylic acids, 1,3-diketones, hydroxycarboxylic acids, polyamines, aminoalcohols, aromatic heterocyclic bases, phenol, aminophenols, oximes, Shiff bases, sulfur compounds, and mixtures thereof. In some embodiments, the chelating agent includes one or more aminocarboxylic acids, one or more hydroxycarboxylic acids, one or more oximes, or a mixture thereof. Some suitable aminocarboxylic acids include, for example, ethylenediaminetetraacetic acid (EDTA), hydroxyethylethylenediaminetriacetic acid (HEDTA), nitrilotriacetic acid (NTA), N-dihydroxyethylglycine (2-HxG), ethylenebis(hydroxyphenylglycine) (EHPG), and mixtures thereof. Some suitable hydroxycarboxylic acids include, for example, tartaric acid, citric acid, gluconic acid, 5-sulfoslicylic acid, and mixtures thereof. Some suitable oximes include, for example, dimethylglyoxime, salicylaldoxime, and mixtures thereof. In some embodiments, EDTA is used.

Some additional suitable chelating agents are polymeric. Some suitable polymeric chelating agents include, for example, polyethyleneimines, polymethacryloylacetones, poly(acrylic acid), and poly(methacrylic acid). Poly(acrylic acid) is used in some embodiments.

Some suitable metal-complexing agents that are not chelating agents are, for example, alkaline carbonates, such as, for example, sodium carbonate.

Metal-complexing agents may be present in neutral form or in the form of one or more salts. Mixtures of suitable metal-complexing agents are also suitable.

Also contemplated are embodiments of the present invention in which no metal-complexing agent is used.

Some embodiments of the present invention do not contain water.

In some embodiments, the composition of the present invention does contain water; in some of such embodiments, the water contains one or more metal ions, such as, for example, iron ions, copper ions, other metal ions, or mixtures thereof. In some embodiments, the water contains 0.1 ppm or more of one or more metal ions.

Among embodiments that use one or more metal-complexing agents, the amount of metal-complexing agent used in the present invention also may vary widely. In some embodiments, the amount of metal-complexing agent will be adjusted to be sufficient to complex the amount of metal ion that is present or expected to be present in those embodiments. For example, in some embodiments in which the composition of the present invention includes water, if a relatively efficient chelating agent is used (i.e., a chelating agent that will form a complex with all or nearly all the metal ions in the water), the ratio of moles of chelating agent to moles of metal ion will be 0.1 or greater; or 0.2 or greater; or 0.5 or greater; or 0.8 or greater. Among such embodiments that use a relatively efficient chelating agent, the ratio of moles of chelating agent to moles of metal ion will be 2 or less; or 1.5 or less; or 1.1 or less.

Independently, in some embodiments, the amount of metal-complexing agent is, based on the total weight of the composition, 25% by weight or less; or 10% by weight or less; or 1% by weight or less. Independently, in some embodiments, the amount of metal-complexing agent is, based on the total weight of the composition, 0.00001 % or more; or 0.0001 % or more; or 0.01 % or more.

Independently, in some embodiments in which the composition of the present invention includes water, the amount of metal-complexing agent can usefully be determined by the molar concentration of metal-complexing agent in the water. In some embodiments, the concentration of metal-complexing agent is 0.00001 mM (i.e., milli-Molar) or greater; or 0.0001 mM or greater; or 0.001 mM or greater; or 0.01 mM or greater; or 0.1 mM or greater. Independently, in some embodiments in which the composition of the present invention includes water, the concentration of metal-complexing agent is 100 mM or less; or 10 mM or less; or 1 mM or less.

In some embodiments, one or more composition of the present invention includes at least one ionic complexing reagent. An ionic complexing reagent interacts with a cyclopropene to form a complex that is stable in water. Some suitable ionic complexing reagents, for example, include lithium ion. In some embodiments, no ionic complexing reagent is used.

In some embodiments, the composition of the present invention includes at least one molecular encapsulating agent. Useful molecular encapsulating agents include, for example, organic and inorganic molecular encapsulating agents. Suitable organic molecular encapsulating agents include, for example, substituted cyclodextrins, unsubstituted cyclodextrins, and crown ethers. Suitable inorganic molecular encapsulating agents include, for example, zeolites. Mixtures of suitable molecular encapsulating agents are also suitable. In some embodiments of the invention, the encapsulating agent is alpha-cyclodextrin, beta-cyclodextrin, gamma-cyclodextrin, or a mixture thereof. The preferred encapsulating agent will vary depending upon the size of the R group. However, as one skilled in the art will appreciate, any cyclodextrin or mixture of cyclodextrins, cyclodextrin polymers, modified cyclodextrins, or mixtures thereof can also be utilized pursuant to the present invention. Cyclodextrins are available from Wacker Biochem Inc., Adrian, MI or Cerestar USA, Hammond, IN, as well as other vendors.

When a molecular encapsulating agent is used in composition of the present invention, some or all of the molecular encapsulating agent is thought to encapsulate one or more cyclopropenes. A cyclopropene or substituted cyclopropene molecule encapsulated in a molecule of a molecular encapsulating agent is known herein as a "cyclopropene molecular encapsulating agent complex." The cyclopropene molecular encapsulation agent complexes can be prepared by any means. In one method of preparation, for example, such complexes are prepared by contacting the cyclopropene with a solution or slurry of the molecular encapsulation agent and then isolating the complex, again using general processes disclosed in U. S. Patent No. 6,017,849. In one method, the cyclopropene is a gas, and the cyclopropene gas is bubbled through a solution of cyclodextrin in water, from which the complex first precipitates and is then isolated by filtration.

In some of the embodiments that use molecular encapsulating agents, the amount of molecular encapsulating agent can usefully be characterized by the ratio of moles of molecular encapsulating agent to moles of cyclopropene. In some embodiments, the ratio of moles of molecular encapsulating agent to moles of cyclopropene is 0.1 or larger; or 0.2 or larger; or 0.5 or larger; or 0.9 or larger. Independently, in some of such embodiments, the ratio of moles of molecular encapsulating agent to moles of cyclopropene is 2 or lower; or 1.5 or lower.

In some embodiments, no molecular encapsulating agent is used.

In some embodiments of the present invention, one or more surfactants are used. Suitable surfactants include, for example, anionic surfactants, cationic surfactants, nonionic surfactants, amphoteric surfactants, and mixtures thereof.

One group of suitable anionic surfactants are the sulfosuccinates, including, for example, alkaline salts of mono- and dialkyl sulfosuccinates. In some embodiments, sodium salts of dialkyl sulfosuccinates are used, including, for example, those with alkyl groups with 4 carbons or more, or 6 carbons or more. In some embodiments, sodium salts of dialkyl sulfosuccinates are used, including, for example, those with alkyl groups with 18 carbons or fewer; or 14 carbons or fewer; or 10 carbons or fewer.

Another group of suitable anionic surfactants are the sulfates and sulfonates, including, for example, alkaline salts of alkyl sulfates. In some embodiments, sodium salts of alkyl sulfates are used, including, for example, those with alkyl groups with 4 carbons or more, or 6 carbons or more, or 8 carbons or more. In some embodiments, sodium salts of alkyl sulfates are used, including, for example, those with alkyl groups with 18 carbons or fewer; or 14 carbons or fewer; or 10 carbons or fewer.

Some suitable surfactants are, for example, sodium di-octyl sulfosuccinate, sodium di-hexyl sulfosuccinate, sodium dodecyl sulfate, alkylphenol ethoxylates (such as, for example, Triton^{™} X-100 from Dow), cetyl pyridinium bromide, and silicone-based surfactants (such as, for example, Silwet^{™} L-77 surfactant from OSi Specialties).

Mixtures of suitable surfactants are also suitable.

Suitable surfactants have various properties. For example, some are excellent at enabling cyclopropene to remain in contact with certain plants or plant parts; some are readily soluble in the other ingredients of the formulation; some do not cause phytotoxicity in plants or plant parts. Very few surfactants excel in every property, but the practitioner will readily be able to choose a surfactant or mixture of surfactants with the balance of properties most appropriate for the desired use, taking into account, for example, the species desired to be treated and the other ingredients intended to be used in the composition.

Among embodiments that use surfactant, some embodiments use surfactant in amounts, by weight based on the total weight of the composition, of 0.025% or more; or 0.05% or more; or 0.1% or more. Independently, among embodiments that use surfactant, some embodiments use surfactant in amounts, by weight based on the total weight of the composition, of 75% or less; or 50% or less; or 20% or less; or 5% or less; or 2% or less; 1% or less; or 0.5% or less; or 0.3% or less.

In some embodiments, no surfactant is present in the composition of the present invention.

In some embodiments of the present invention, one or more oils are used. As used herein, an "oil" is a compound that is liquid at 25°C and 1 atmosphere pressure and that has a boiling point at 1 atmosphere pressure of 30°C or higher. As used herein, "oil" does not include water, does not include surfactants (as described herein), and does not include alcohols (as described herein).

In some of the embodiments that use oil, one or more oil may be used that has boiling point of 50°C or higher; or 75°C or higher; or 100°C or higher. Independently, in some of the embodiments that use oil, one or more oil may be used that has an average molecular weight of 100 or higher; or 200 or higher; or 500 or higher.

An oil may be either a hydrocarbon oil (i.e., an oil whose molecule contains only atoms of carbon and hydrogen) or a non-hydrocarbon oil (i.e., an oil whose molecule contains at least at least one atom that is neither carbon nor hydrogen).

Some hydrocarbon oils are straight, branched, or cyclic alkane compounds with 6 or more carbon atoms. Some other suitable hydrocarbon oils have one or more carbon-carbon double bond, one or more carbon-carbon triple bond, or one or more aromatic ring, possibly in combination with each other and/or in combination with one or more alkane group. Some hydrocarbon oils are obtained from petroleum distillation and contain a mixture of compounds, along with, in some cases, impurities. Hydrocarbon oils obtained from petroleum distillation may contain a relatively wide mixture of compositions or may contain relatively pure compositions. In some embodiments, hydrocarbon oils are used that contain 6 or more carbon atoms. In some embodiments, hydrocarbon oils are used that contain 18 or fewer carbon atoms. Some suitable hydrocarbon oils include, for example, hexane, decane, dodecane, hexadecane, diesel oil, refined paraffinic oil (e.g., Ultrafine^{™} spray oil from Sun Company), and mixtures thereof.

Among embodiments that use non-hydrocarbon oil, some suitable non-hydrocarbon oils are, for example, fatty non-hydrocarbon oils. "Fatty" means herein any compound that contains one or more residues of fatty acids. Fatty acids are long-chain carboxylic acids, with chain length of at least 4 carbon atoms. Typical fatty acids have chain length of 4 to 18 carbon atoms, though some have longer chains. Linear, branched, or cyclic aliphatic groups may be attached to the long chain. Fatty acid residues may be saturated or unsaturated, and they may contain functional groups, including for example alkyl groups, epoxide groups, halogens, sulfonate groups, or hydroxyl groups, that are either naturally occurring or that have been added. Some suitable fatty non-hydrocarbon oils are, for example, fatty acids; esters of fatty acids; amides of fatty acids; dimers, trimers, oligomers, or polymers thereof; and mixtures thereof.

Some of the suitable fatty non-hydrocarbon oils, are, for example, esters of fatty acids. Such esters include, for example, glycerides of fatty acids. Glycerides are esters of fatty acids with glycerol, and they may be mono-, di-, or triglycerides. A variety of triglycerides are found in nature. Most of the naturally occurring triglycerides contain residues of fatty acids of several different lengths and/or compositions. Some suitable triglycerides are found in animal sources such as, for example, dairy products, animal fats, or fish. Further examples of suitable triglycerides are oils found in plants, such as, for example, coconut, palm, cottonseed, olive, tall, peanut, safflower, sunflower, corn, soybean, linseed, tung, castor, canola, citrus seed, cocoa, oat, palm, palm kernel, rice bran, cuphea, or rapeseed oil.

Among the suitable triglycerides, independent of where they are found, are those, for example, that contain at least one fatty acid residue that has 14 or more carbon atoms. Some suitable triglycerides have fatty acid residues that contain 50% or more by weight, based on the weight of the residues, fatty acid residues with 14 or more carbon atoms, or 16 or more carbon atoms, or 18 or more carbon atoms. One example of a suitable triglyceride is soybean oil.

Suitable fatty non-hydrocarbon oils may be synthetic or natural or modifications of natural oils or a combination or mixture thereof. Among suitable modifications of natural oils are, for example, alkylation, hydrogenation, hydroxylation, alkyl hydroxylation, alcoholysis, hydrolysis, epoxidation, halogenation, sulfonation, oxidation, polymerization, and combinations thereof. In some embodiments, alkylated (including, for example, methylated and ethylated) oils are used. One suitable modified natural oil is methylated soybean oil.

Also among the suitable fatty non-hydrocarbon oils are self-emulsifying esters of fatty acids.

Another group of suitable non-hydrocarbon oils are silicone oils. Silicone oils are oligomers or polymers that have a backbone that is partially or fully made up of -Si-O- links. Silicone oils include, for example, polydimethylsiloxane oils. Polydimethylsiloxane oils are oligomers or polymers that contain units of the form 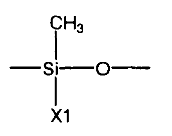 where at least one of the units has X1 = CH₃. In other units, X1 may be any other group capable of attaching to Si, including, for example, hydrogen, hydroxyl, alkyl, alkoxy, hydroxyalkyl, hydroxyalkoxy, alkylpolyalkoxyl, substituted versions thereof, or combinations thereof. Substituents may include, for example, hydroxyl, alkoxyl, polyethoxyl, ether linkages, ester linkages, amide linkages, other substituents, or any combination thereof. In some suitable polydimethylsiloxane oils, all X1 groups are methyl. In some suitable polydimethylsiloxanes, at least one unit has an X1 group that is not methyl; if more than one non-methyl X1 unit is present, the non-methyl X1 units may be the same as each other, or two or more different non-methyl X1 units may be present. Polydimethylsiloxane oils may be end-capped with any of a wide variety of chemical groups, including, for example, hydrogen, methyl, other alkyl, or any combination thereof. Also contemplated are cyclic polydimethylsiloxane oils.

Mixtures of suitable oils are also suitable.

Among embodiments that use oil, some embodiments use oil in amounts, by weight based on the total weight of the composition, of 0.25% or more; or 0.5% or more; or 1% or more. Independently, among embodiments that use oil, some embodiments use oil in amounts, by weight based on the total weight of the composition, of 90% or less; or 50% or less; or 10% or less; or 5% or less; or 4% or less; or 3% or less.

In some embodiments, no oil is present in the composition of the present invention.

Some embodiments of the present invention involve the use of one or more alcohols. The suitable alcohols include, for example, alkyl alcohols and other alcohols. As used herein, alkyl alcohols are alkyl compounds with one hydroxyl group; the alkyl group may be linear, branched, cyclic, or a combination thereof; the alcohol may be primary, secondary, or tertiary. In the present invention, alkyl alcohols are used which have alkyl groups with 2 or more carbon atoms. In some embodiments, ethanol, isopropanol, or a mixture thereof are used. In some embodiments, alkyl alcohols are used which have alkyl groups with 20 or fewer carbon atoms; or 10 or fewer carbon atoms; or 6 or fewer carbon atoms; or 3 or fewer carbon atoms.

Among embodiments that use alcohols, some embodiments use alcohol in amounts, by weight based on the total weight of the composition, of 0.25% or higher; or 0.5% or higher, or 1% or higher. Among embodiments that use alcohols, some embodiments use alcohol in amounts, by weight based on the total weight of the composition, of 90% or less; or 50% or less; or 10% or less; or 5% or less; or 4% or less; or 3% or less.

In some embodiments, no alcohol is present in the composition of the present invention.

The adjuvants listed above may be used alone or in any combination. Various embodiments are contemplated that include the use of, for example, the following compositions: compositions that contain one or more surfactant but no hydrocarbon oil and no alcohol; compositions that contain one or more hydrocarbon oil but no surfactant and no alcohol; and compositions that contain one or more alcohol but no surfactant and no hydrocarbon oil. In some embodiments, compositions are used that contain one or more surfactant and one or more hydrocarbon oil; or compositions are used that contain one or more surfactant and one or more alcohol. In some embodiments, compositions are used that contain one or more surfactant, one or more hydrocarbon oil, and one or more alcohol.

It is sometimes desirable to include in the composition one or more adjuvants, in addition to surfactants, alcohols, and hydrocarbon oils. Such additional adjuvants include, for example, extenders, pigments, fillers, binders, plasticizers, lubricants, wetting agents, spreading agents, dispersing agents, stickers, adhesives, defoamers, thickeners, transport agents, and emulsifying agents. Some of such adjuvants commonly used in the art can be found in the John W. McCutcheon, Inc. publication *Detergents and Emulsifiers, Annual,* Allured Publishing Company, Ridgewood, New Jersey, U.S.A. In some embodiments, such additional adjuvants are not present in the composition of the present invention.

Plants and plant parts are subject to various biological processes such as, for example, growth, ripening, senescence, maturation, abscission, and degradation. Altering biological processes in plants or plant parts by contacting them with one or more chemical compositions is known as plant growth regulation. Chemical compositions that cause plant growth regulation are known herein as "plant growth regulators." A plant growth regulator may alter a process either by enhancing it (such as, for example, speeding the process or increasing it); by inhibiting it (such as, for example, slowing the process or decreasing it); by initiating it; or by a combination thereof. The alteration of biological process or processes in plants or plant parts caused by one or more plant growth regulator is known herein as the "plant response."

Some embodiments of the present invention involve the use of at least one plant growth regulator that is not a cyclopropene (i.e., at least one non-cyclopropene plant growth regulator). Any compound that is effective as a plant growth regulator and is not a cyclopropene is suitable. Some examples of classes of suitable plant growth regulators that are not cyclopropenes are as follows:
(PGR-I) Ethylene, non-cyclopropene ethylene release agents, and non-cyclopropene compounds with high ethylene activity. Suitable ethylene release agents include, for example, 2-chloroethylphosphonic acid (ethephon), abscisic acid, propylene, vinyl chloride, carbon monoxide, acetylene, 1-butene, and non-cyclopropene compounds that are progenitors of compounds with high ethylene activity.
(PGR-II) Non-cyclopropene compounds that inhibit ethylene synthesis or ethylene receptor site action or both. Suitable examples include non-cyclopropene compounds that contain active metal ions (such as, for example, silver ions or other metal ions) and rare amino acids that inhibit ethylene synthesis such as, for example, aminoethoxyvinylglycine and aminooxyacetic acid.
(PGR-III) Non-cyclopropene compounds with cytokinin activity. Suitable examples include benzyl adenine, kinetin, zeatin, adenine, dihydrozeatin, tetrahydropyranylbenzyladenine, dimethylallyladenine, methylthiozeatin, ethoxyethyladenine, benzylaminobenzimidazole, chlorophenylphenylurea, benzthiozolyoxyacetic acid, and fluorophenylbiuret compounds that elicit cytokinin response.
(PGR-IV) Non-cyclopropene auxins. Suitable examples include indoleacetic acid, indolepropionic acid, indolebutyric acid, naphthaleneacetic acid, beta-naphthoxyacetic acid, 4-chlorophenoxyacetic acid, 2,4-dichlorooxyacetic acid, trichlorophenoxyacetic acid, trichloro benzoic acid, and 4 amino 3,5,6 trichloropicolinic acid.
(PGR-V) Gibberellins. Suitable gibberellins include, for example, GA₂, GA₃, GA₄, GA₅, GA₇, and GA₈ having variously substituted giberellin backbone structures. Further suitable examples include non-cyclopropene compounds that show gibberellin-like activity, such as, for example, helminthosporic acid, phaseolic acid, kaurenoic acid, and steviol.
(PGR-VI) Cofactors and inhibitors of IAA oxidase. Suitable examples include non-cyclopropene phenolic inhibitors that are intermediates of phenylalanine or tyrosine pathways, including, for example, chlorogenic acid, coumaric acid, quercitin, caffeic acid, and other non-cyclopropene phenolic inhibitors.
(PGR-VII) Non-cyclopropene secondary growth inhibitors, including, for example, methyl jasmonate.
(PGR-VIII) Non-cyclopropene natural growth hormones. Suitable non-cyclopropene natural growth hormones include those derived from, for example, kelp, algae, and bacteria. In some embodiments that use non-cyclopropene natural growth hormones, the hormone is used in unpurified form.

Among embodiments in which at least one plant growth regulator that is not a cyclopropene is used, the amount of plant growth regulator that is not a cyclopropene in the composition may vary widely, depending on one or more of the type of composition, the desired plant response, and the intended method of use. In some embodiments, the amount of plant growth regulator that is not a cyclopropene, based on the total weight of the composition, is 4% by weight or less; or 1 % by weight or less; or 0.5% by weight or less; or 0.05% by weight or less. Independently, in some embodiments, the amount of plant growth regulator that is not a cyclopropene, based on the total weight of the composition, is 0.000001% by weight or more; or 0.00001% by weight or more; or 0.0001% by weight or more; or 0.001% by weight or more.

In some embodiments, no plant growth regulator that is not a cyclopropene is present in the composition of the present invention.

It is contemplated that various embodiments of the present invention will involve the use of, in addition to one or more cyclopropene, any of the ingredients discussed herein above, either singly or in any combination.

In the practice of the present invention, treatment of a plant may be conducted by any method that allows the composition or compositions of the present invention to contact the plant. A composition of the present invention may be solid, liquid, gas, or combination thereof. A composition of the present invention may be homogeneous or heterogeneous. If a composition of the present invention is liquid, it may be a solution or dispersion or combination thereof.

Among embodiments in which one or more liquid compositions are used, some examples of methods of contact are, for example, spraying, foaming, fogging, pouring, brushing, dipping, similar methods, and combinations thereof. In some embodiments, spraying or dipping or both is used. In some embodiments, spraying is used.

It is contemplated that the composition of the present invention may be contacted with the entire plant or may be contacted with one or more plant parts. Plant parts include any part of a plant, including, for example, flowers, buds, blooms, seeds, cuttings, roots, bulbs, fruits, vegetables, leaves, and combinations thereof. The composition of the present invention may be contacted with whole plants, with plant parts that are attached to whole plants, with plant parts that have been removed from whole plants, or any combination thereof.

Some plants are grown for the purpose of removing one or more plant parts, when such parts are considered a useful product. In some embodiments of the present invention, plants that produce useful plant parts are treated with composition or compositions of the present invention prior to the harvesting of the useful plant parts (such treatment is herein called "pre-harvest" treatment). In such embodiments, each composition that is used may, independently of any other compositions that may be used, be brought into contact with all of or with some portion of the plant. If a composition is brought into contact with a portion of the plant, that portion may or may not include the useful plant part intended to be harvested.

In some embodiments, a plant is treated while it is rooted in soil. In some embodiments, a plant is treated while it is alive. In some embodiments, at least one treatment is performed on a plant after germination but before any useful plant parts are harvested. In some pre-harvest treatments, a plant is treated at least once after it blooms (additional treatment before the plant blooms may or may not be performed). Independently, in some pre-harvest treatments of a plant that produces fruits or vegetables, the plant is treated at least once after the fruit or vegetable sets (additional treatment before the fruit or vegetable sets may or may not be performed).

Suitable treatments may be performed on a plant or plants that are planted in a field, in a garden, in a building (such as, for example, a greenhouse), or in another location. Suitable treatments may be performed on a plant or plants that are planted in open ground, in one or more containers (such as, for example, a pot, planter, or vase), in confined or raised beds, or in other places.

Among embodiments in which methods of the present invention are used to treat plants in a field or other location that is not inside a building, an amount of the composition of the present invention may be used that gives an amount of cyclopropene of 0.001 or more grams per hectare; or 0.01 or more; or 0.1 or more. Independently, in such embodiments, the amount of cyclopropene may be 10,000 or less grams per hectare; or 1,000 or less; or 100 or less.

In some embodiments of the present invention, treatment of a group of plants with the methods of the present invention will increase the crop yield of that group of plants, compared to the crop yield that would have been obtained from that group of plants if it had not been treated with the methods of the present invention. The increase in crop yield may be obtained in any of a wide variety of ways. For example, one way an increase in crop yield may be obtained is that each plant may produce a greater number of useful plant parts. As another example, one way an increase in crop yield may be obtained is that each useful plant part may have higher weight. As a third example, crop yield may increase when a larger number of potentially useful plant parts meets the minimum criteria for acceptable quality. Other ways of increasing the crop yield may also result from the practice of the present invention. Also contemplated are increases in crop yield that happen by any combination of ways.

Another contemplated benefit of practicing some embodiments of the present invention is that the general quality of the crop may be improved. That is, a crop produced by methods of the present invention may have a general or average level of quality higher than comparable crops produced without the methods of the present invention, as judged by the quality criteria appropriate for that crop. In some cases, such higher-quality crops may command higher prices when sold.

Various benefits may result from the practice of the present invention. The beneficial effects on the treated plants include, for example, one or more of the following effects (some of which have been discussed herein above and some of which are different from those discussed herein above): increased biomass volume, increased biomass quality, increased fruit, increased fruit size (when desired), decreased fruit size (when desired), harvest timing (advanced or delayed, as desired), decreased cell turgor, decreased russetting, lowered stress response, lowered wounding response, increased shelf life of harvested plant parts, apical dominace, abscission prevention, senescence prevention, yellowing prevention, improved vigor during growth, improved vigor during transit, improved vigor during transplant, and combinations thereof.

The ingredients of the present invention may be admixed by any means, in any order.

In some embodiments, water is present in the composition of the present invention. In some embodiments, water is combined with the ingredients described herein. In other embodiments, the water may be present in solution with one or more water-soluble organic solvents, with a weight ratio of water to water-soluble organic solvent of 100/0, or 90/10, or 85/15, or 80/20, or 75/25, or 70/30, or 65/35.

Also contemplated are embodiments in which water is not included in the composition. In such embodiments, one or more cyclopropene and one or more adjuvants are admixed, optionally with one or more molecular encapsulating agent, and optionally with additional adjuvants, to form a composition that can be used without admixing with water.

### EXAMPLES

### Preparation of Cyclopropenes

The following biologically active cyclopropenes were made. The methods of making them and their Tomato Epinasty Test results are disclosed in US 2005/0065033:

| **Example No.** | **Name** |
|---|---|
| 1 | Benzene, 1-chloro-4-(1-cyclopropen-1-ylmethyl)- (9CI) |
| 2 | Thiophene, 2-(1-cyclopropen-1-ylmethyl)- (9CI) |
| 3 | Silane, [6-(1-cyclopropen-1-yl)hexyl]dimethylphenyl- (9CI) |
| 4 | Benzene, [1-(1-cyclopropen-1-yl)-1-methylethyl]- (9CI) |
| 5 | Benzene, (1-methyl-2-cyclopropen-1-yl)- (9CI) |
| 6 | Benzene, [(1-methyl-2-cyclopropen-1-yl)methoxy]- (9CI) |
| 7 | Benzene, [(2-methyl-1-cyclopropen-1-yl)methyl]- (9CI) |
| 8 | Benzene, 1-chloro-4-[[2-(1-cyclopropen-1-yl)ethyl]thio]- (9CI) |
| 8 | 1-Cyclopropene-1-ethanol, benzenesulfonate (9CI) |
| 10 | 1H-Pyrazole, 4-bromo-1-(2-ethyl-1-cyclopropen-1-yl)- (9CI) |
| 11 | 1H-Imidazole, 1-[7-(1-cyclopropen-1-yl)heptyl]- (9CI) |
| 12 | Benzenamine, N-[7-(1-cyclopropen-1-yl)heptyl]-N-phenyl- (9CI) |
| 13 | Morpholine, 4-[3-(1-cyclopropen-1-yl)-1-oxopropyl]- (9CI) |
| 14 | Benzene, 1-methoxy-4-[(1-methyl-2-cyclopropen-1-yl)methoxy]- (9CI) |
| 15 | Benzene, (1-cyclopropen-1-ylmethyl)- (9CI) |
| 16 | Benzene, [2-(1-cyclopropen-1-yl)ethyl]- (9CI) |
| 17 | Benzene, [2-(1-methyl-2-cyclopropen-1-yl)ethyl]- (9CI) |
| 18 | Benzene, [(1-methyl-2-cyclopropen-1-yl)methyl]- (9CI) |
| 19 | Benzene, 1-(1-cyclopropen-1-ylmethyl)-4-methyl- (9CI) |
| 20 | Benzene, [3-(1-cyclopropen-1-yl)propyl]- (9CI) |
| 21 | Benzene, 1-(1-cyclopropen-1-ylmethyl)-2-methoxy- (9CI) |
| 22 | Benzene, [4-(1-cyclopropen-1-yl)butyl]- (9CI) |
| 23 | Benzene, 1-chloro-4-[2-(1-cyclopropen-1-yl)ethyl]- (9CI) |
| 24 | Benzene, 1-(1-cyclopropen-1-ylmethyl)-3-methyl- (9CI) |
| 25 | Benzene, 2-(1-cyclopropen-1-ylmethyl)-1,3,5-trimethyl- (9CI) |
| 26 | 1H-Pyrazole, 1-[7-(1-cyclopropen-1-yl)heptyl]- (9CI) |
| 27 | 1,3-Dioxolane, 2-[3-(1-cyclopropen-1-yl)propyl]- (9CI) |
| 28 | 1H-1,2,4-Triazole, 1-[7-(1-cyclopropen-1-yl)heptyl]- (9CI) |
| 29 | Pyridine, 2-[[2-(1-cyclopropen-1-yl)ethyl]thio]- (9CI) |
| 30 | 1-Piperidinamine, N-[7-(1-cyclopropen-1-yl)heptylidene]- (9CI) |
| 31 | Benzene, 1-[(2-ethyl-1-cyclopropen-1-yl)methoxy]-3-(trifluoromethyl)-(9CI) |
| 32 | 1,3,2-Dioxaboretane, 2-(2-octyl-1-cyclopropen-1-yl)- (9CI) |
| 33 | Benzenemethanol, 4-methoxy-alpha-(2-methyl-1-cyclopropen-1-yl)- (9CI) |
| 34 | Benzene, (2,3,3-trichloro-1-cyclopropen-1-yl)- (8CI,9CI) |
| 35 | Pyrimidine, 2-[2-(1-cyclopropen-1-yl)ethyl]-4,6-dimethyl- (9CI) |
| 36 | Pyridine, 4-[[2-(1-cyclopropen-1-yl)ethyl]thio]- (9CI) |
| 37 | Benzoic acid, 4-methyl-, 4-(1-cyclopropen-1-yl)butyl ester (9CI) |
| 38 | Benzene, [(2-bromo-1-cyclopropen-1-yl)methyl]- (9CI) |
| 39 | Benzene, [(2-chloro-1-cyclopropen-1-yl)methyl]- (9CI) |
| 40 | 2-Furancarboxylic acid, 2-(1-cyclopropen-1-yl)ethyl ester (9CI) |
| 41 | 3-Furancarboxylic acid, 2-(1-cyclopropen-1-yl)ethyl ester (9CI) |
| 42 | 2-Benzofurancarboxylic acid, 2-(1-cyclopropen-1-yl)ethyl ester (9CI) |
| 43 | 3-Pyridinecarboxylic acid, 5,6-dichloro-, 2-(1-cyclopropen-1-yl)ethyl ester (9CI) |
| 44 | 1,2,3-Thiadiazole-5-carboxylic acid, 2-(1-cyclopropen-1-yl)ethyl ester (9CI) |
| 45 | 2,4-Isothiazolidinedicarboxylic acid, 4-[2-(1-cyclopropen-1-yl)ethyl] 2-(1,1-dimethylethyl) ester (9CI) |
| 46 | Benzoic acid, 4-[(methylsulfonyl)oxy]-, 7-(1-cyclopropen-1-yl)heptyl ester (9CI) |
| 47 | 2-Furancarboxylic acid, tetrahydro-, 7-(1-cyclopropen-1-yl)heptyl ester (9CI) |
| 48 | Pyridine, 2-[[3-(1-cyclopropen-1-yl)propyl]thio]- (9CI) |
| 49 | 1-Cyclopropene-1-octanol, benzenesulfonate (9CI) |
| 50 | Benzene, 1-[[8-(1-cyclopropen-1-yl)octyl]thio]-4-methyl- (9CI) |
| 51 | 1H-1,2,4-Triazole, 3-[[8-(1-cyclopropen-1-yl)octyl]thio]- (9CI) |
| 52 | 1H-Pyrrole-2-carboxylic acid, 1-methyl-, 3-(1-cyclopropen-1-yl)propyl ester (9CI) |
| 53 | 3(2H)-Pyridazinone, 6-(4-chlorophenyl)-2-(2-ethyl-1-cyclopropen-1-yl)-(9CI) |
| 54 | Pyrazinecarboxylic acid, 3-(1-cyclopropen-1-yl)propyl ester (9CI) |
| 55 | Benzoic acid, 4-(1H-pyrrol-1-yl)-, 2-(1-cyclopropen-1-yl)ethyl ester (9CI) |
| 56 | Silane, (1-cyclopropen-1-ylmethyl)triethyl- (9CI) |
| 57 | Silane, (1-cyclopropen-1-ylmethyl)trimethyl- (9CI) |
| 58 | Silane, [6-(1-cyclopropen-1-yl)hexyl]trimethyl- (9CI) |
| 59 | Silane, [2-(1-cyclopropen-1-yl)ethyl]trimethyl- (9CI) |
| 60 | Silane, trimethyl(2-octyl-1-cyclopropen-1-yl)- (9CI) |
| 61 | 1-Cyclopropene-1-ethanol, methanesulfonate (9CI) |
| 62 | 1-Cyclopropene-1-heptanol, methanesulfonate (9CI) |
| 63 | Cyclopropene, 1-[7-(ethylthio)heptyl]- (9CI) |
| 64 | Cyclopropene, 1-bromo-2-octyl- (9CI) |
| 65 | Cyclopropene, 3-methyl-3-pentyl- (9CI) |
| 66 | Cyclopropene, 3-methyl-3-nonyl- (9CI) |
| 67 | Cyclopropene, 1-heptyl-2-methyl- (9CI) |
| 68 | 1-Cyclopropene-1-propanoic acid, 2-bromo-, (acetyloxy)methyl ester (9CI) |
| 69 | 1-Cyclopropene-1-propanoic acid, 2-bromo-, ethyl ester (9CI) |
| 70 | 1-Cyclopropene-1-propanoic acid, 2-bromo- (9CI) |
| 71 | 2-Cyclopropene-1-carboxylic acid, 2-octyl- (9CI) |
| 72 | Silane, trimethyl (2,3,3-trimethyl-1-cyclopropen-1-yl)- (9CI) |
| 73 | Silane, butyldimethyl(2-methyl-1-cyclopropen-1-yl)- (9CI) |
| 74 | Silane, triethyl(2-methyl-1-cyclopropen-1-yl)- (9CI) |
| 75 | Silane, [(7-(1-cyclopropen-1-yl)heptyl]oxy](1,1-dimethylethyl)dimethyl-(9CI) |
| 76 | 1-Cyclopropene-1-methanol, 2-ethyl-, methanesulfonate (9CI) |
| 77 | Phosphorodithioic acid, O,O-diethyl S-[(2-ethyl-1-cyclopropen-1-yl)methyl] ester (9CI) |
| 78 | 1-Cyclopropene-1-butanol, methanesulfonate (9CI) |
| 79 | Boronic acid, (2-octyl-1-cyclopropen-1-yl)- (9CI) |
| 80 | Boronic acid, (2-methyl-1-cyclopropen-1-yl)-, mono(1-methylethyl) ester (9CI) |

### Treatment of Crops

Formulations could be made that contain water; a complex of a cyclopropene with an appropriate encapsulating cyclodextrin, using a molar ratio of cyclopropene to cyclodextrin of 0.9: 1 or 1: 1 or 1.1:1; and at least one of the following: one or more plant growth regulator that is not a cyclopropene; one or more adjuvant selected from the group consisting of surfactants, alcohols, oils, and mixtures thereof; or a mxture thereof. These formulations could contain any of the ingredients in any of the amounts listed herein below.

In the list herein below, "%" means percent by weight of ingredient, based on the weight of the formulation; "ppm" means parts by weight of ingredient per million parts by weight of water; and "ppb" means parts by weight of ingredient per billion parts by weight of water. Ingredients that could be used in formulations:
Carrier fluid: water or a solution of water and one or more organic solvents that is soluble in water, with a weight ratio of water to water-soluble organic solvent of 100/0 or 85/15 or 70/30.
Cyclopropene contained in the complex: any of Examples 1 to 80.
Amount of complex: sufficient to give an amount of cyclopropene of 1 ppb, or 10 ppb, or 100 ppb, or 1 ppm, or 10 ppm, or 100 ppm, or 1000 ppm.
Surfactant Type: none; or polyoxyethylenesorbitan monooleate, or sodium dodecylsulfate, or sodium dioctylsulfosuccinate, or octylphenol ethoxylate, or silicone surfactant, in amount of 0.1%, or 1%, or 10%.
Chelating Agent: none; or sodium salt of EDTA, in amount of 10 ppm or 100 ppm or 1,000 ppm.
Alcohol: none; or ethanol or isopropanol, in amount of 0.1% or 1% or 10%.
Oil: none; or mineral oil or refined paraffinic oil or alkane (with 7 to 16 carbons) or vegetable oil or silicone oil, in amount of 0.1% or 1% or 10%.
Plant Growth Regulator that is not a cyclopropene: none; or ethephon, or silver ion, or benzyl adenine, or indoleacetic acid, or gibberillin GA₂, or chlorogenic acid, or methyl jasmonate, or kelp growth hormone, in amount of 10 ppm or 100 ppm or 1,000 ppm or 10,000 ppm.

Any composition that contains any combination of the above ingredients, optionally along with other ingredients, could be applied to plants in a field before harvest. Plants could be sprayed with the composition to give an amount of cyclopropene of 0.2 grams or 2 grams or 20 grams per hectare.

Also, any composition that contains any combination of the above ingredients, optionally along with other ingredients, could be applied to plants indoors by spraying to runoff with the composition.

As long as such a composition contains, in addition to one or more cyclopropene, one or more surfactant, one or more alcohol, one or more oils, one or more plant growth regulator that is not a cyclopropene, or a mixture thereof, such a composition would show beneficial effect on the plant parts that were subsequently harvested.

## Claims

1. A composition comprising
(I). one or more cyclopropenes of the formula 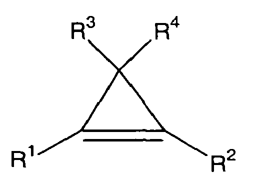 wherein:
a) each R¹, R², R³ and R⁴ is independently selected from the group consisting of H and a chemical group of the formula:
-(L)ₙ-Z
wherein:
i) n is an integer from 0 to 12;
ii) each L is independently selected from the group consisting of D1, D2, E, and J, wherein:
D1 is of the formula: 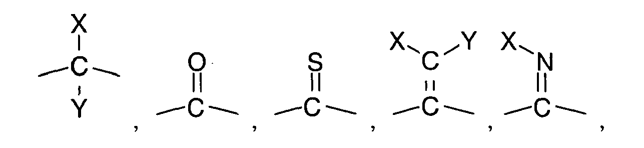 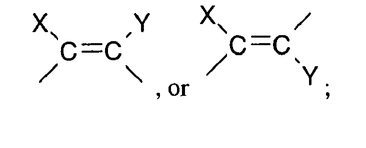
D2 is of the formula: 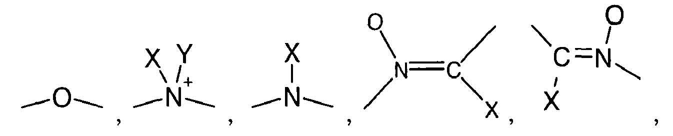 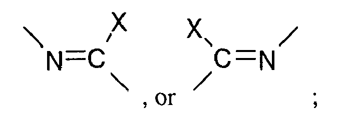
E is of the formula: 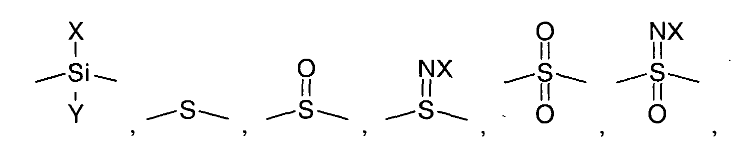 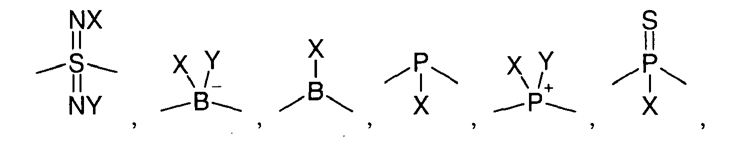 or 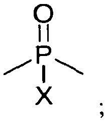 and
J is of the formula: , 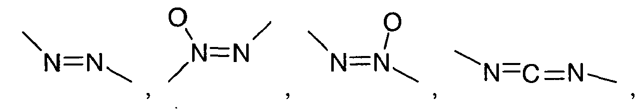 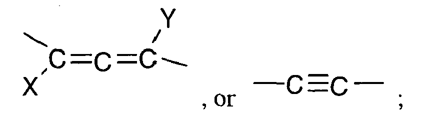 wherein:
A) each X and Y is independently a chemical group of the formula:
-(L)ₘ-Z;
and
B) m is an integer from 0 to 8; and
C) no more than two D2 or E groups are adjacent to each other and no J groups are adjacent to each other;
iii) each Z is independently selected from the group consisting of hydrogen, halo, cyano, nitro, nitroso, azido, chlorate, bromate, iodate, isocyanato, isocyanido, isothiocyanato, pentafluorothio, and a chemical group G, wherein G is a 3 to 14 membered ring system; and
iv) the total number of heteroatoms in -(L)ₙ-Z is from 0 to 6; and
b) the total number of non-hydrogen atoms in said compound is 50 or less; and
(II) one or more of
(AA) one or more plant growth regulator that is not a cyclopropene, or
(BB) one or more adjuvant selected from the group consisting of one or more surfactants, one or more alcohols, one or more oils, and mixtures thereof, or
(CC) one or more mixture of said (AA) and said (BB).

2. The composition of claim 1, wherein said composition does not contain any cyclopropene of the formula 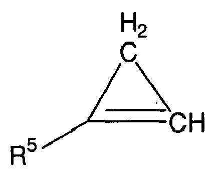 wherein said R⁵ is hydrogen or a substituted or unsubstituted alkyl, alkenyl, alkynyl, cycloalkyl, cycloalkylalkyl, phenyl, or naphthyl group; wherein the substituents, when present, are independently halogen, alkoxy, or substituted or unsubstituted phenoxy.

3. The composition of claim 1, wherein said composition further comprises one or more molecular encapsulation agents within each of which is encapsulated one or more of said cyclopropenes.

4. The composition of claim 1, wherein said one or more adjuvants comprises at least one surfactant.

5. The composition of claim 1, wherein said one or more adjuvants comprises at least one alkyl alcohol.

6. The composition of claim 1, wherein said composition further comprises at least one hydrocarbon oil.

7. The composition of claim 1, wherein said composition further comprises at least one metal-complexing agent.

8. A method comprising the step of contacting the composition of claim 1 with one or more plants or plant parts.

9. The method of claim 8, wherein said contacting is performed by spraying or dipping or a combination thereof.

10. The method of claim 8, wherein said contacting is performed by spraying.
